# EUROPEAN PATENT SPECIFICATION

(11) **EP 1 469 983 B1**
(45) Date of publication and mention of the grant of the patent: **08.09.2010**
(21) Application number: 02790269.1
(22) Date of filing: 17.12.2002
(51) Int. Cl.: B29C 45/04, B29C 65/16

(54) **METHOD OF HEATING/TREATING OF SURFACES WHICH ARE BEING MOLDED AND ASSEMBLED**
VERFAHREN ZUM ERWÄRMEN/BEHANDELN VON GEFORMTEN UND ZUSAMMENGEFÜGTEN FLÄCHEN
PROCEDE DE CHAUFFAGE/TRAITEMENT DE SURFACES EN COURS DE MOULAGE ET D'ASSEMBLAGE

(30) Priority: 17.12.2001 DK 200101889
(43) Date of publication of application: 27.10.2004
(73) Proprietor: Gram Technology APS, 3460 Birkerød (DK)
(72) Inventor: GRAM, Jes, DK-3460 Birkerød (DK)
(74) Representative: Jensen, Peter Kim
(86) International application number: PCT/DK2002/000867
(87) International publication number: WO 2003/059596

(56) References cited:
- WO-A1-01/56772
- WO-A1-02/36319
- US-B1- 6 299 816
- PATENT ABSTRACTS OF JAPAN vol. 8, no. 158 (M-311) 21 July 1984 & JP 59 052 626 A (SUMITOMO KAGAKU KOGYO KK) 27 March 1984
- PATENT ABSTRACTS OF JAPAN vol. 4, no. 114 (M-026) 15 August 1980 & JP 55 071 541 A (MATSUSHITA ELECTRIC WORKS LTD.) 29 May 1980
- PATENT ABSTRACTS OF JAPAN vol. 200, no. 24 11 May 2001 & JP 2001 205681 A (TOYOTA MOTOR CORP.) 31 July 2001

## Description

The invention concerns a procedure for assembling of two moulded objects.

From the international PCT-application, PCT/DK 01/00699 (WO 02/36319 A1) is known a method for the assembling of hollow items preferably of plastic, e.g. two ball shells in an apparatus with at least one turnable mold part, and where the assembling takes place in immediate connection with the hollow objects are being molded. From this patent application is it also known that there can be applied heat on those sides of the objects, which are to be brought into contact with each other during the assembling. But it is in this PCT application not further specified how this heat supply is realized. However there have in reality appeared considerable disadvantages by attempts to assemble several combinations of materials, e.g. both uniform, such as polyolefin's, but especially of materials quite different in chemical respect, e.g. polyethylene and polystyrene, as the assembly not has become sufficiently durable, regardless that there is used considerable heat transfer. Besides, it has shown that this heat transfer often at the same time can have that serious disadvantage, that the heat also very easily is risking to deform both the areas, that are to be assembled, and the surrounding areas.

The procedure according to the invention has the purpose to help to eliminate these disadvantages, without at the same time losing the considerable advantage that you according to the above-metioned patent application achieve by assembling two objects moulded in the same apparatus, both when it concerns uniform and in chemical respect quite different materials.

This can suitable be achieved by the necessary applying of heat/energy takes place in the form of a guided laser beam from a suitable type of laser or another kind of concentrated radiation. With such a radiation you achieve a combination of advantages, as the laser beam can be programmed to only infiuence an exactly specified and specific part of the areas, which are to be assembled, whereby the other part of the surface, its outer contours and further appearance is kept intact. Additionally you can achieve, that the laser beam in the limited areas, where it is destined to hit, can create scratches or other kinds of grooves and/or cuts in the surfaces to be assembled, which makes this assembling easier and more durable because of the hereby achieved supplementing mechanical adhesion.

The procedure according to the invention is characterized by features stated in claim 1.

The at the invention mentioned achieved advantages and the further advantages of the procedure according to the invention will appear from the drawing and the description hereof, as
fig. 1 shows a mechanism with two turnable mold parts seen from above in closed condition, and not being according to the invention.
fig. 2 the same mechanism as in fig. 1 in open condition,
fig. 3 a mechanism for carrying out the procedure according to the invention with a turnable mold part seen from above in closed condition,
fig. 4 the same mechanism as in fig. 3 in open condition.

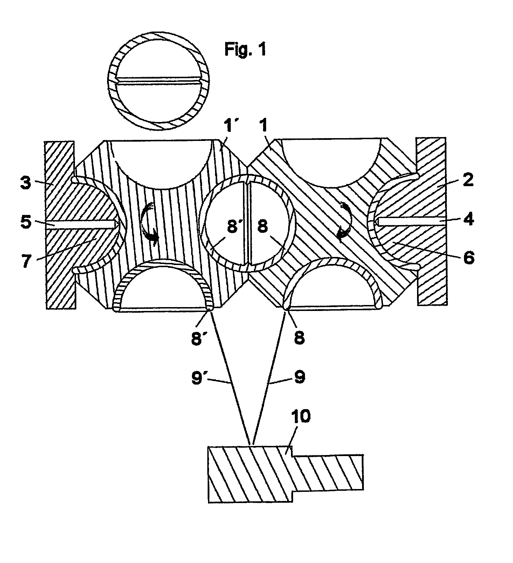

On fig. 1 is seen from above shown two turnable mold parts 1 and 1', which can be turned opposite to each other in the direction of the arrows. The turnable mold parts are shown in closed condition between the stationary mold part 2 and the movable mold part 3. The injection of the plastic material takes place respectively through the channel 4 in the stationary mold part 2 and the channel 5 in the movable mold part 3, and respectively through the core 6 and the core 7. The objects that are molded in each of the turnable mold parts 1 and 1' are on the figure shown as half ball shells, which are to be put together into a complete hollow ball.

After the cooling, the opening of the mold and respectively the turning of the mold a quarter of a round (90 degrees) in the direction of the arrow, plus the closing of the mold, the two now molded ball-shells will be in the lowest position on the figure. Here their outer surfaces 8 and 8' will be influenced of the beams 9 and 9' from the laser 10. After another opening of the mold, 90 degrees turning of the mold in the direction of the arrows and closing of the mold, the radiated surfaces 8 and 8' are lead together and now adhere into a full, hollow ball. After renewed opening of the mold, turning of the turnable mold parts 1 and 1' another 90 degrees in the direction of the respective arrows plus ejection of the assembled ball from the mold, the mold is ready for a new cycle as the above- mentioned.

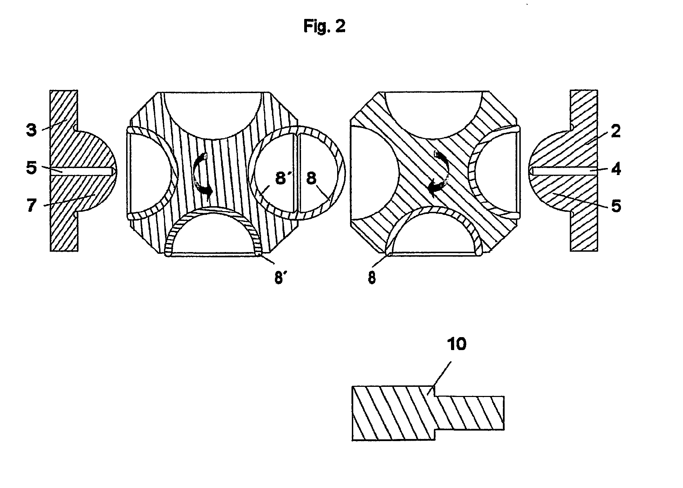

Fig. 2 shows the same mold according to the invention as in fig. 1, but here in its various opened conditions. The beams from the laser 10 are here shown disrupted, both when the mold is during opening and closing, as the surfaces 8 and 8' at best are radiated sufficiently precise when the mold is closed and in complete rest.

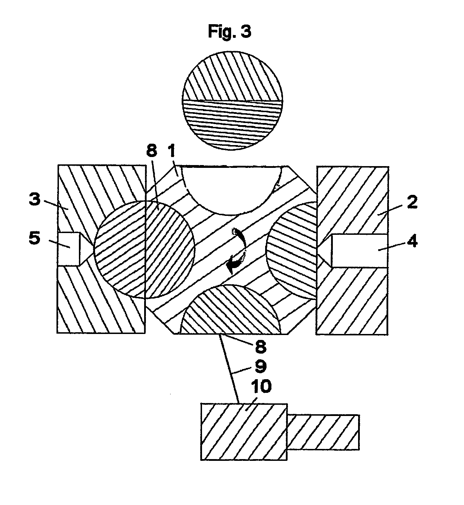

In fig. 3 arc seen a mechanism for carrying out the procedure according to the invention with only one turnable mold part 1 in closed condition between the stationary mold part 2 and the movable mold part 3, in which there are channels 4 and 5, where through there are added plastic material to the mold on two opposite situated places at the same time. After cooling of the material, opening of the mold, turning of the turnable mold part 90 degrees in the direction of the arrows and re-closing of the mold, it is now the molded (half) object in the lowest position on the figure, where it on the surface 8 is radiated of the beam 9 from the laser 10. After renewed opening of the mold, turning 90 degrees in the direction of the arrow, and closing of the mold, there now through the channel 5 is molded new material into the mold cavity in the movable mold part 3, which adheres on the radiation treated surface 8 of the already molded (half) object. After cooling, opening of the mold, renewed fuming of 90 degrees, the now assembled object and finished object in its uppermost position on the figure ready for be ejected from the mold, and a new cycle of the same kind is ready to be started.

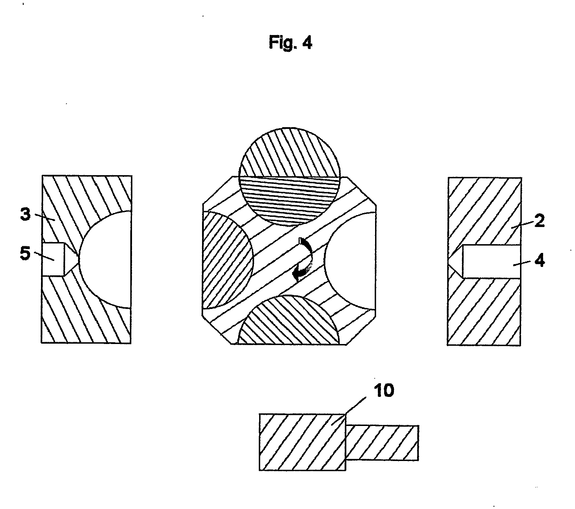

Fig. 4 shows the same mold as in fig. 3, but here shown in all its various open positions.

There could on the drawing have been shown more examples of the mechanism for carrying out the procedure according to the invention; but the on the figures shown should be sufficient to show the fundamental principles in the invention. If it had not been drawing-technical very difficult, there could have been shown examples of multi-component objects, where the molding together often is especially problematic, either because of difficult controllable cooling of the first molded object because of its geometry, differences in material thickness and/or the combination of materials with bad mutual adhesion. Here a reheating on selected and precisely limited areas on surfaces, there are to be assembled, exactly by means of a such a precise instrument as a laser or a similar source of energy, will show itself to be a crucial improvement in relation to the hitherto know, and often simply making moldings together possible, which not earlier were possible in an acceptable quality.

## Claims

1. Procedure for assembling of two moulded objects assembled at mutual border surfaces (8) and moulded in the same mechanism, which is furnished with at least one turnable mould part (1), said procedure comprising the steps:
a - moulding a first object of a first material in a first mould cavity of the turnable mould part (1).
b - rotating the turnable mould part (1).
c - supply heat/energy suitably in the form of one or more laser beams (9) or another kind of concentrated radiation, which is directed against a border surface (8) of the moulded first object for mutual assembly with the second object, so as to reheat said surface,
d - rotating the turnable mould part (1),
e - moulding a second object of a second material in a second mould cavity and on the heated border surface (8) of the moulded first object, the moulded second object adhering to the border surface (8) of the moulded first object to create an assembled object assembled of the two moulded objects.

2. Procedure according to claim 1, **characterised in that** the objects to be assembled are plastic objects.

3. Procedure according to at least one of the previous claims, **characterised in that** by the supply of heat/energy the border surface of the moulded first object is deformed in chosen areas to such an extent that an improved degree of mechanical bonding is achieved with the second material of the second moulded object, when this is moulded.

4. Procedure according to at least one of the previous claims, **characterised in that** a laser beam or a corresponding concentrated radiation is used to engrave in the border surface of the moulded first object e.g. a pattern or a flow channel in which the second material can flow and thereby achieve an adhesion even in areas, where the second material normally would not be in possession of sufficient heat/energy to create a sufficiently good chemical/mechanical connection with the moulded first object.

5. Procedure according to at least one of the previous claims, **characterised in that** a laser beam or a corresponding concentrated radiation is used to create scratches or other kinds of grooves and/or cuts in the border surface of the moulded first object for mutual assembly with the second object so as to obtain supplementing adhesion to the moulded second object.

6. Procedure according to at least one of the previous claims, **characterised in that** the turnable mould part (1) is rotated 90° in step b and step d.

## Patentansprüche

1. Prozedur zum Zusammenfügen zweier geformter Objekte, die an gegenseitigen Grenzflächen (8) zusammengefügt werden und in derselben Vorrichtung geformt werden, die mit mindestens einem drehbaren Formteil (1) versehen ist, wobei besagte Prozedur die folgenden Schritte umfasst:
a - Formen eines ersten Objektes aus einem ersten Material in einem ersten Formhohlraum des drehbaren Formteils (1),
b - Rotieren des drehbaren Formteils (1),
c - geeignetes Zuführen von Wärme/Energie in Form eines oder mehrerer Laserstrahlen (9) oder einer anderen Art von konzentrierter Strahlung, die zum gegenseitigen Zusammenfügen mit dem zweiten Objekt auf eine Grenzfläche (8) des geformten ersten Objekts gerichtet wird, um besagte Fläche wiederzuerwärmen,
d - Rotieren des drehbaren Formteils (1),
e - Formen eines zweiten Objekts aus einem zweiten Material in einem zweiten Formhohlraum und auf der erwärmten Grenzfläche (8) des geformten ersten Objekts, wobei das geformte zweite Objekt an der Grenzfläche (8) des geformten ersten Objekts haftet, um ein zusammengefügtes Objekt zu erzeugen, das aus den zwei geformten Objekten zusammengefügt ist.

2. Prozedur gemäß Anspruch 1, **dadurch gekennzeichnet, dass** die zusammenzufügenden Objekte Kunststoffobjekte sind.

3. Prozedur gemäß mindestens einem der vorhergehenden Ansprüche, **dadurch gekennzeichnet, dass** die Grenzfläche des geformten ersten Objekts durch die Zufuhr von Wärme/Energie in ausgewählten Bereichen in einem solchen Ausmaß deformiert wird, dass ein verbesserter Grad an mechanischem Verbinden mit dem zweiten Material des zweiten geformten Objekts erreicht wird, wenn dieses geformt wird.

4. Prozedur gemäß mindestens einem der vorhergehenden Ansprüche, **dadurch gekennzeichnet, dass** ein Laserstrahl oder eine entsprechende konzentrierte Strahlung verwendet wird, um in der Grenzfläche des geformten ersten Objekts z. B. ein Muster oder einen Fließkanal einzugravieren, in dem das zweite Material fließen und **dadurch** auch in Bereichen, in denen das zweite Material normalerweise nicht in Besitz von genügend Wärme/Energie wäre, um eine ausreichend gute chemische/mechanische Verbindung mit dem geformten ersten Objekt zu erzeugen, Haftung erreichen kann.

5. Prozedur gemäß mindestens einem der vorhergehenden Ansprüche, **dadurch gekennzeichnet, dass** ein Laserstrahl oder eine entsprechende konzentrierte Strahlung verwendet wird, um zum gegenseitigen Zusammenfügen mit dem zweiten Objekt Kratzer oder andere Arten von Rillen und/oder Schnitte in der Grenzfläche des geformten ersten Objekts zu erzeugen, um ergänzende Haftung an dem geformten zweiten Objekt zu erzielen.

6. Prozedur gemäß mindestens einem der vorhergehenden Ansprüche, **dadurch gekennzeichnet, dass** der drehbare Formteil (1) in Schritt b und Schritt d um 90° rotiert wird.

## Revendications

1. Procédure pour l'assemblage de deux objets moulés assemblés sur leurs surfaces de délimitation mutuelles (8) et moulés dans le même mécanisme, qui est équipé d'au moins une partie de moule tournante (1), ladite procédure comprenant les étapes consistant à :
a. mouler un premier objet d'un premier matériau dans une première cavité de moule de la partie de moule tournante (1),
b. faire tourner la partie de moule tournante (1),
c. fournir la chaleur/énergie appropriée sous la forme d'un ou plusieurs faisceaux laser (9) ou d'un autre type de rayonnement concentré, qui est dirigé contre une surface de délimitation (8) du premier objet moulé pour un assemblage mutuel avec le second objet, afin de rechauffer ladite surface.
d. faire tourner la partie de moule tournante (1),
e. mouler un second objet d'un second matériau dans une seconde cavité de moule et sur la surface de délimitation chauffée (8) du premier objet moulé, le second objet moulé adhérant à la surface de délimitation (8) du premier objet moulé afin de créer un objet assemblé formé de deux objets moulés.

2. Procédure selon la revendication 1, **caractérisée en ce que** les objets à assembler sont des objets en plastique.

3. Procédure selon au moins l'une quelconque des revendications précédentes, **caractérisée en ce que** de par l'alimentation en chaleur/énergie, la surface de délimitation du premier objet moulé est déformée dans des régions choisies dans une mesure telle qu'un degré de liaison mécanique accru soit obtenu avec le second matériau du second objet moulé lorsque celui-ci est moulé.

4. Procédure selon au moins l'une quelconque des revendications précédentes, **caractérisée en ce qu'**un faisceau laser ou un rayonnement concentré correspondant est utilisé pour graver dans la surface de délimitation du premier objet moulé, par exemple un motif ou un canal d'écoulement, dans lequel le second matériau peut s'écouler et ainsi créer une adhérence même dans des régions où le second matériau normalement de serait pas en possession de suffisamment de chaleur/énergie pour créer une liaison chimique/mécanique suffisamment bonne avec le premier objet moulé.

5. Procédure selon au moins l'une quelconque des revendications précédentes, **caractérisée en ce qu'**un faisceau laser ou un rayonnement concentré correspondant est utilisé pour créer des rayures ou d'autres types de rainures et/ou de coupes dans la surface de délimitation du premier objet moulé pour un assemblage mutuel avec le second objet afin d'obtenir d'avantage d'adhérence avec le second objet moulé.

6. Procédure selon au moins l'une quelconque des revendications précédentes, **caractérisée en ce que** la partie de moule tournante (1) est soumise à une rotation de 90 ° à l'étape b et à l'étape d.
